# EUROPEAN PATENT SPECIFICATION

(11) **EP 3 898 107 B1**
(45) Date of publication and mention of the grant of the patent: **03.09.2025**
(21) Application number: 19832552.4
(22) Date of filing: 20.12.2019
(51) Int. Cl.: B25B 29/02

(54) **APPARATUS FOR SIMULTANEOUSLY ACTUATING AT LEAST TWO SCREW TENSIONING DEVICES**
VORRICHTUNG ZUM GLEICHZEITIGEN BETÄTIGEN MINDESTENS ZWEIER SCHRAUBENSPANNVORRICHTUNGEN
APPAREIL D'ACTIONNEMENT SIMULTANÉ D'AU MOINS DEUX DISPOSITIFS DE SERRAGE DE VIS

(30) Priority: 21.12.2018 GB 201821007
(43) Date of publication of application: 27.10.2021
(73) Proprietor: Caterpillar Energy Solutions GmbH, 68167 Mannheim (DE)
(72) Inventor: GUISASOLA, Inigo, 68167 Mannheim (DE)
(74) Representative: Novagraaf Group
(86) International application number: PCT/EP2019/025477
(87) International publication number: WO 2020/126100

(56) References cited:
- EP-A1- 1 753 065
- WO-A1-2017/016654
- WO-A1-2019/089416
- CN-U- 206 937 237

## Description

### Technical Field

The present invention refers to an apparatus and a method for simultaneously actuating at least two screw tensioning devices or any other devices for tensioning a connecting element.

### Technological Background

Tensable connecting elements, such as tensable screw connections, for tightening or connecting components are well known. Specifically, for installing such tensable connecting elements, the use of screw tensioning devices is known, for example, in the field of steel constructions and various engine design applications. These screw tensioning devices generally operate based on a torque-free tensioning method, according to which pulling forces are used to lengthen large screws or bolts in an elastic range during installation such that, upon releasing the pulling forces, the connecting elements retract and thereby apply tensional forces onto the components to be tightened.

For example, in a known use of the screw tensioning devices, at first, a first end of a screw is connected to a first component via a threaded means. Then, a second component to be fastened to the first component is provided such that a threaded rod of the screw extends therethrough. Via a second end of the screw, a nut is placed on the screw so as to be engaged to the threaded rod. Thereafter, the second end of the screw is engaged to the screw tensioning device and a pulling force is applied thereto so as to elastically lengthen the screw. In this lengthened state, the nut is further tightened such that, upon releasing the pulling force applied to the screw, the screw together with the nut apply a tensional force for frictional connecting the first to the second component.

Such a screw tensioning device, for example, is known from US 2018/0215022 A1. In the known device, pulling forces are used for tensioning a screw connecting element engaged to a fixation element of the device. Specifically, the known device comprises a support element configured to support the fixation element against a component to be tightened during tensioning operation. The fixation element is arranged to be movable relative to the support element so as to apply tension or to remove tension from the screw. Further, an actuating unit is provided for translationally actuating the fixation element relative to the support element. The actuating unit comprises an actuating element constituting an interface element for engagement with a tool for operating the device, i.e. by receiving an actuating torque. Specifically, the actuating unit is configured for transforming or translating a rotational movement applied to the actuating element into a translational movement of the fixation element relative to the support element.

CN 206 937 237 refers to a gear unit comprised of a central active gear used as an input element and a plurality of slave gears arranged around and engaging with the active gear. Attached to the slave gears are shafts configured to form-fittingly engage with nuts to be tightened. Upon rotational actuation of the active gear, the plurality of slave gears start to rotate accordingly and tighten a plurality of nuts simultaneously.

WO 2019/089416 A1 refers to an apparatus for simultaneously applying torque to a plurality of jackbolts of a multi-jackbolt tensioner. The apparatus comprises a planetary gear assembly for transforming an input torque into an output torque being applied to a plurality of coupling sockets, each of which is connected to one jackbolt.

EP 1 753 065 A1 discloses a fastening tool for a fuel cell having socket members individually engaging with fastening members for simultaneously fastening a large number of unit cells layered on each other.

Further, hydraulically driven screw tensioning devices are known, in which the fixation element is hydraulically actuated to be moved relative to the support element.

In engine design applications, usually, more than one tensable connecting element is used for structurally connecting elements of an engine. For example, for assembly of a cylinder head, four tensable screws are used. In the known applications, screw tensioning devices may be used to successively mount the tensable screws which may be time-consuming and have effects on cycle times during assembly.

### Summary of the Invention

In view of the prior art, it is an objective to provide an apparatus and a method which enables a time-efficient assembly in applications, where more than one tensable connecting element is used.

This object is solved by means of an apparatus for simultaneously actuating at least two screw tensioning devices having the technical features of claim 1, the use of such an apparatus having the technical features of claim 9 and a method for simultaneously actuating at least two screw tensioning devices having the technical features of claim 10. Preferred embodiments are set forth in the present specification, the Figures as well as the dependent claims.

Accordingly, an apparatus for simultaneously actuating at least two screw tensioning devices is provided, comprising a transmission input element for engagement with a tool; at least two transmission output elements, each of which is connectable to one of the screw tensioning devices and rotatably mounted around a rotational axis; and a gear unit configured to transfer a rotational movement of the transmission input element into a rotational movement of each one of the transmission output elements around their rotational axis, wherein the gear unit comprises a central gear fixed to the transmission input element and connected or connectable to each one of the transmission output elements in a torque-transmitting manner, wherein the central gear is movable between an engagement position, in which a torque-transmitting connection to the transmission output elements is engaged, and a disengagement position, in which the torque-transmitting connection to the transmission output elements is released
and/or wherein
the gear unit comprises at least two intermediate gears connected or connectable to the transmission input element and one associated transmission output element in a torque-transmitting manner, wherein each one of the intermediate gears is movable between an engagement position, in which a torque-transmitting connection between the transmission input element and the associated transmission output element is engaged, and an disengagement position, in which the torque-transmitting connection between the transmission input element and the associated transmission output element is released.

Furthermore, a use of the above described apparatus is provided for simultaneously actuating at least two screw tensioning devices.

To that end, a method for actuating at least two screw tensioning devices is provided, comprising the steps of providing the above described apparatus, connecting each one of the at least two transmission output elements of the apparatus to one actuating element of the screw tensioning devices, and rotationally actuating the transmission input element of the apparatus to simultaneously actuate the screw tensioning devices.

### Brief Description of the Drawings

The present disclosure will be more readily appreciated by reference to the following detailed description when being considered in connection with the accompanying drawings in which:
Figure 1 schematically shows a top and cross-sectional view of an apparatus for simultaneously actuating four screw tensioning devices connected thereto;
Figure 2 schematically shows a sectional view of a screw tensioning device depicted in Figure 1;
Figure 3 schematically shows a sectional view of the apparatus along section plane A-A depicted in Figure 1 in an engaged operating state;
Figure 4 schematically shows the sectional view of the apparatus in a disengaged operating state;
Figure 5 schematically shows the sectional view of the apparatus in a partially engaged state; and
Figure 6 shows another embodiment of the apparatus for simultaneously actuating four screw tensioning devices.

### Detailed Description of Preferred Embodiments

In the following, the invention will be explained in more detail with reference to the accompanying Figures. In the Figures, like elements are denoted by identical reference numerals and repeated description thereof may be omitted in order to avoid redundancies.

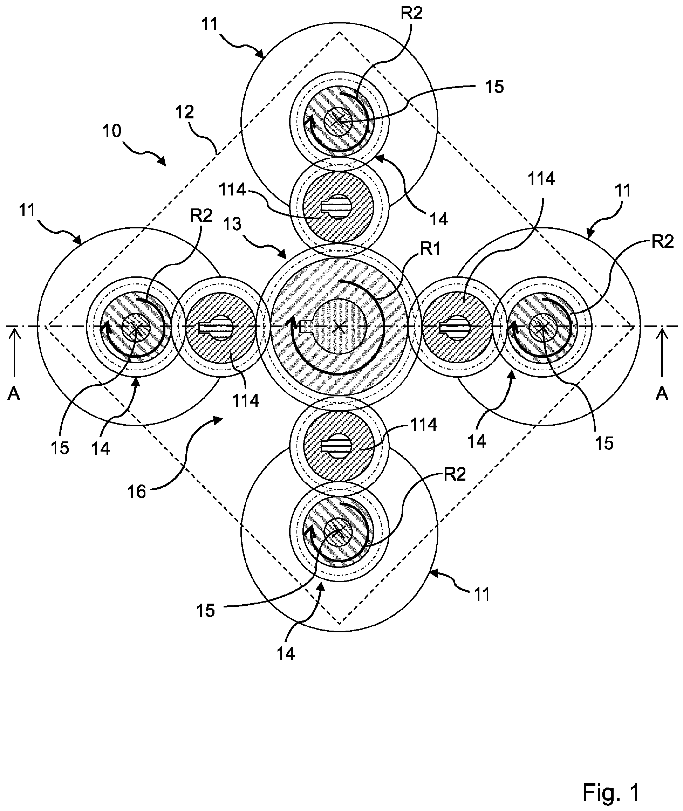

Figure 1 schematically shows an apparatus 10 for simultaneously actuating four screw tensioning devices 11 connected to the apparatus 10, respectively. The apparatus 10 comprises a housing 12 which, for overview reasons, is transparently depicted.

The shown apparatus 10 may be used to operate the screw tensioning devices 11 so as to tension, i.e. preload, and/or loosen, i.e. untighten, four tensable screw connections simultaneously. In the context of the present disclosure, the term "tensable" refers to a material property indicating that a component, screw connection, at least partially, is capable of being elastically expanded and thus of storing an amount of elastic energy when being subjected to a tensioning force.

For doing so, the shown apparatus 10 comprises a transmission input element 13 for engagement with a tool so as to receive an input torque T1 for actuating the apparatus 10, four transmission output elements 14, each of which is releasably connected to one screw tensioning device 11 and is rotatably mounted in the housing 12 around a rotational axis 15, and a gear unit 16 for coupling the transmission input element 13 and the transmission output elements14. Specifically, the gear unit 16 is configured to transfer a rotational movement R1 of the transmission input element 13 into a rotational movement of each one of the transmission output elements 14 around their rotational axis 15, as indicated in Figure 1 by arrows R1 and R2. Although the arrows indicating the rotational movement of the transmission input element 13 and the transmission output elements 14 point in only one direction, the apparatus 10 is configured such that the transmission input element 13 and thus the transmission output elements 14 can rotate reversely.

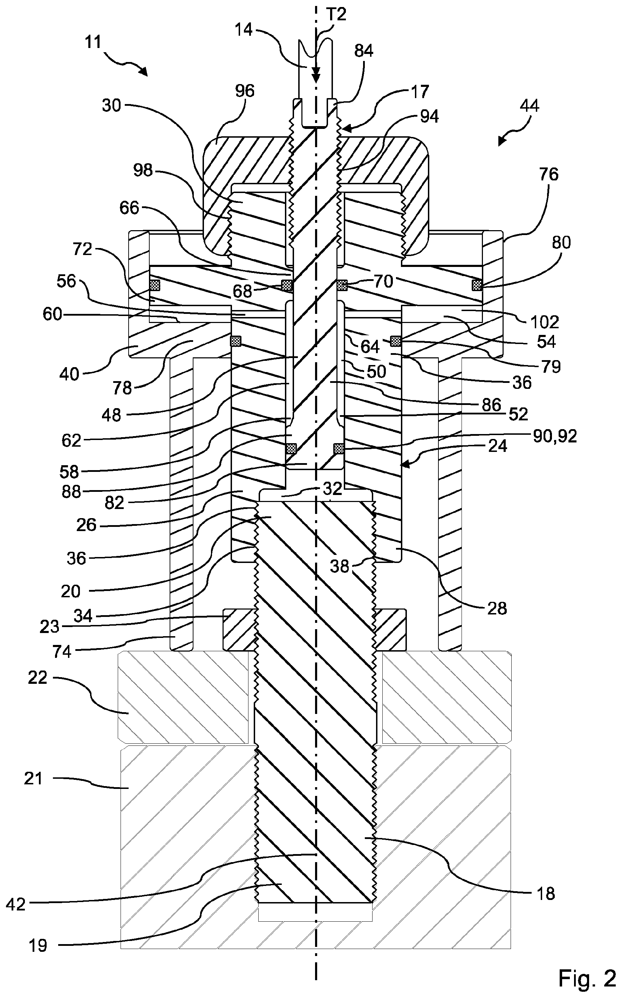

Specifically, as depicted in Figure 2, each of the transmission output elements 14 is form-fittingly coupled to an actuating element 17 of one screw tensioning device 11 so as to transfer an output torque T2 thereto. In this way, upon rotation of the transmission input element 13, the transmission output elements 14 are rotated around their rotational axis 15 together with the associated actuating element 17 of the screw tensioning device 11. As a result, by rotating the actuating element 17, the screw tensioning device 11 is operated so as to perform tensioning or loosening of a tensable connecting element 18.

In the following, the screw tensioning device 11, i.e. in view of its structure and operation, is further specified under reference to Figure 2.

The screw tensioning device 11 is intended for tensioning, i.e. preloading, and/or loosening, i.e. untightening, one tensable connecting element 18. Specifically, the connecting element 18 is provided in the form of a screw comprising a first end 19, an opposed second end 20 and an elastic part positioned between the first end 19 and the second end 20. The elastic part is capable of being elastically lengthened when the connecting element 18 is subjected to a pulling force by means of the device 11.

The connecting element 18 is configured for connecting, i.e. force- and/or form-fittingly connecting, a first component 21 to a second component 22. Specifically, the first end 19 of the connecting element 18 is configured to be connected to the first component 21 by means of a threaded engagement, as depicted in Figure 2. The elastic part of the connecting element 18 extends through the second component 22 such that the second end 20 of the connecting element 18 is positioned on a side of the second component 22 facing away from the first component 19. For connecting the first and the second component 21, 22, a nut 23 is provided which is in threaded engagement with the elastic part of the connecting element 18.

The device 11 comprises an engagement element 24 connectable to the connecting element 18. Specifically, the engagement element 24 includes a cylindrical portion 26 having a first end 28 and a second end 30. At the first end 28, the engagement element 24 includes a cylindrical recess 32 to house the second end 20 of the connecting element 18, while the first end 19 of the connecting element 18 is connected to the first component 21 by means of the threaded engagement. The recess 32 includes internal threads 34 formed on a side wall 36 of the engagement element 24 to engage with complementary threads 38 formed at the second end 16 of the connecting element 18.

Further, the device 11 comprises a support element 40 configured to support the engagement element 24 against the second component 22. The engagement element 24 is translationally movable relative to the support element 40, i.e. along a longitudinal axis 42 of the device. Specifically, upon translationally moving the engagement element 24 relative to the support element 40, a tensioning force may be applied to or may be removed from the connecting element 18 fixed to the engagement element 24.

The device 11 further comprises an actuating unit 44 for translating the rotational movement applied to the actuating element 17 into a translational movement of the engagement element 24 relative to the first and second component 21,22 to be tightened and thus relative to the support element 40. In other words, the actuating unit 44 is provided so as to actuate the engagement element 24 relative to the support element 40. In the following, the structure and operation of the actuating unit 44 is explained in more detail.

The actuating unit 44 is at least partly hydraulically actuated. In other words, a hydraulic fluid is used to transfer motive power so as to move the engagement element 24 relative to the support element 40. For doing so, the actuating unit 44 comprises a piston 48 accommodated within and movable relative to the engagement element 24, i.e. along the longitudinal axis 42. Further, a fluid chamber 50 accommodating the fluid is provided which is delimited by the piston 48, the engagement element 24 and the support element 40. In this configuration, the actuating unit 44 is designed such that a translational movement of the piston 48 manipulates a volume of the fluid chamber 50 and thereby moves the engagement element 24 with respect to the support element 40 so as to apply or remove a tension acting on the connecting element 18 connected to the engagement element 24.

More specifically, the fluid chamber 50 comprises two distinct portions, a piston portion 52 delimited by and provided between the piston 48 and the engagement element 24 and an effective portion 54 delimited by and provided between the engagement element 24 and the support element 40. The piston portion 52 and the effective portion 54 are fluid-communicatively connected via two connecting bores 56 provided in the engagement element 24. A base area 58 of the piston portion 52 is provided with an effective cross section that is smaller than an effective cross section of a base area 60 of the effective portion 54. In this context, the "effective cross section" refers to an area that is perpendicular to the longitudinal direction 42 and thus perpendicular to a moving direction of both the piston 48 and the engagement element 24 relative to the support element 40. By this configuration, an actuating force applied onto the piston 48 is hydraulically transformed into a force acting on the engagement element 24 that is higher compared to the actuating force acting on the piston 48.

For accommodating the piston 48, the engagement element 24 further includes a bore 62 extending along the longitudinal axis 42 of the device 11. Specifically, the bore 62 extends from the second end 30 of the cylindrical portion 26 to the recess 32 formed at the first end 28 of the cylindrical portion 26 of the engagement element 24 and is configured to receive the piston 48. A diameter of the bore 62 may be less than the diameter of the recess 32 which thus together form a stepped opening within the engagement element 24. Further, the bore 62 includes a variable diameter along the longitudinal axis 42. In other words, a wall of the engagement element 24 has a variable width along the length of the bore 62 such that the diameter of the bore 62 changes along the length of the bore 62. As depicted in Figure 2, the bore 62 includes a wider portion 64 and a narrower portion 66. At the wider portion 64, a distance between the piston 48 and the wall of the engagement element 24 is greater than at the narrower portion 66.

As shown in Figure 2, at the narrower portion 66, the piston 48 contacts the wall of the engagement element 24. The narrower portion 66 includes a groove 68 formed in the wall of the engagement element 24 and extending along a perimeter of the bore 62. A first sealing ring 70 is disposed in the groove 68 to form a seal joint between the piston 48 and the engagement element 24. The first sealing ring 70 is positioned between the piston 48 and the wall of the engagement element 24.

The engagement element 24 also includes a plate 72 extending radially from the cylindrical portion 26 of the engagement element 24. The plate 72 is positioned normal to the longitudinal axis 42 and is proximal to the second end 30 of the engagement element 24. The plate 72 is cylindrical in shape and forms a flange portion in proximity to the second end 30 of the engagement element 24.

The engagement element 24 is received at least partly within the support element 40. As set forth above, the engagement element 24 is arranged and adapted to be moved relative to the support element 40 to apply tension to or remove tension from the connecting element 18. The support element 40 includes a first cylindrical portion 74 and a second cylindrical portion 76 connected to one another by a connection portion 78. The first cylindrical portion 74 forms a lower part of the support element 40 to be positioned on the second component 22. The first cylindrical portion 74 surrounds a part of the connecting element 18, the first end 28 of the engagement element 24 and a portion of the cylindrical portion 26 of the engagement element 24. Specifically, the first cylindrical portion 74 surrounds the portion of the cylindrical portion 26 which is positioned underneath the plate 72 in the illustration depicted in Figure 2.

The second cylindrical portion 74 is spaced away from the first cylindrical portion 74 by the connection portion 78. The second cylindrical portion 76 surrounds the plate 72 of the engagement element 24 such that an inner surface of the second cylindrical portion 76 contacts an outer surface of the plate 72. In other words, the plate 72 is positioned within the second cylindrical portion 76 of the support element 40 and is configured to move relative to the second cylindrical portion 76.

Further, a third sealing ring 80 is positioned between the inner surface of the second cylindrical portion 76 and the outer surface of the plate 72 to prevent leakage of the fluid accommodated in the fluid chamber 50. Specifically, the third sealing ring 80 may be positioned in a groove formed either into the inner surface of the second cylindrical portion 76 or into the outer surface of the plate 72, as depicted in Figure 2.

As can be gathered from Figure 2, the first cylindrical portion 74, the second cylindrical portion 76, and the connection portion 78 are hollow cylindrical portions having inner diameters different from each other, thereby forming stepped configurations with each other. The inner diameter of the connection portion 78 is smaller than the inner diameters of both the first cylindrical portion 74 and the second cylindrical portion 76. The connection portion 78 comprises an opening to guide the engagement element 24 within the support element 40, which opening has a diameter slightly larger than the diameter of the portion of the engagement element 24 guided by the support element 40. The connection portion 78 may further define a recess in which a second sealing ring 79 may be disposed for providing a sealing between the engagement element 24 and the connection portion 78.

The plate 72, the connection portion 78, and the second cylindrical portion 76 of the support element 40 together form the effective portion 54 of the fluid chamber 50. The effective portion 54 is fluidly connected to the bore 62 in the engagement element 24 via the connecting bores 56. The effective portion 54 is configured to receive the fluid from the piston portion 52 accommodated in the bore 62 of the engagement element 24 due to an axial movement of the piston 48 slidably positioned within the engagement element 24.

In this way, the fluid may move back and forth between the piston portion 52 and the effective portion 54 of the fluid chamber 50. During operation, the position of the piston 48 determines how much fluid is displaced from the piston portion 52 to the effective portion 54, and vice versa. As can be gathered from Figure 1, when the piston 48 is moved in an upward direction, i.e. in a direction facing away from the engagement element 24, the size of the piston portion 52 gets smaller. Accordingly, fluid is displaced therefrom into the effective portion 54 causing an increase of pressure in the effective portion 54 as more and more fluid enters thereinto. This pressure acts on the engagement element 24 which causes it to move in a direction facing away from the support element 40, i.e. along the longitudinal axis 42. This movement induces tensioning and thus lengthening of the connecting element 18. In this tensioned and lengthened state of the connecting element 18, an operator may tighten the nut 23 so as to position the nut 23 closer to the second component 22, i.e. to abut on the second component 22. This may be performed by reaching the nut 23 through openings in the support element 40 with a tool, an end of which may be inserted into the openings at the side of the nut 23 to turn and thus tighten or loosen the nut 23.

The piston 48 has a generally cylindrical shape with a head end 82 and a rod end 84 that are distal to one another and connected by a shaft 86. The head end 82 has a sealing portion 88 that is larger in diameter than the shaft 86. The diameter of sealing portion 88 corresponds to a diameter of the bore 62 in the engagement element 24. The sealing portion 88 comprises a recess 90 that is circular in nature. A fourth sealing ring 92 is provided within the recess 90.

The first to fourth sealing ring 70, 79, 80, 92 may be made from metal, such as iron or steel, ceramics, fibrous materials, elastomer and/or plastic.

The piston 48 further includes a threaded portion 94 that is in threaded engagement with a cap 96 of the engagement element 24. The cap 96 is firmly fixed to the second end 30 of the cylindrical portion 26 by means of a threaded connection 98. Alternatively, the cap 96 may be pressed to the second end 30 of the cylindrical portion 26 of the engagement element 24.

In the shown configuration, the actuating element 17 is formed by the rod end 84 of the piston 48. As the piston 48 and thus the actuating element 46 are connected to the cap 96 by means of a threaded engagement, the actuating unit 44 is designed such that a rotational movement of the actuating element 17 is transformed into a translational movement of the piston 48 relative to the engagement element 24 which manipulates the volume of the fluid chamber 50 and thereby moves the engagement element 24 with respect to the support element 40. As a result, upon rationally manipulating the actuation element 17, a tensioning or loosening of the connecting element 18 connected to the engagement element 24 is performed.

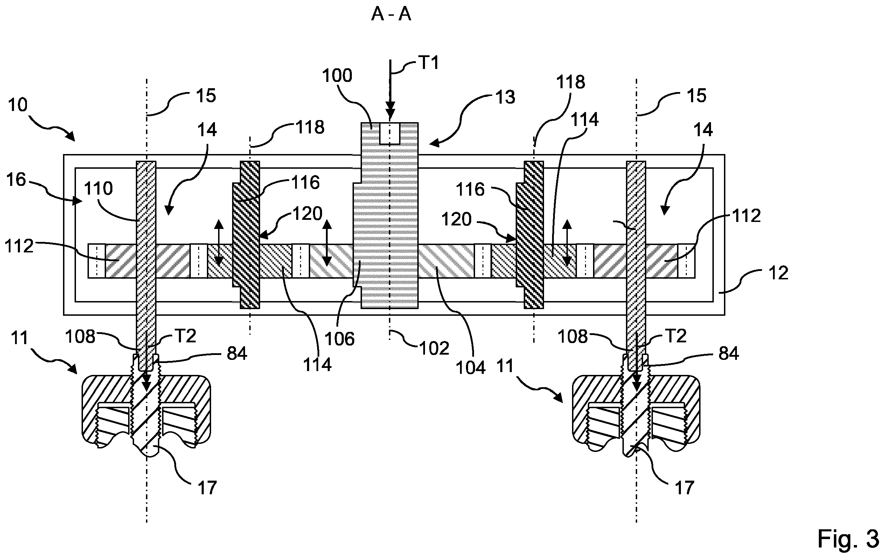

In the following, under reference to Figures 1 and 3, the structure and operation of the apparatus 10 is further specified.

The apparatus 10 is provided with the transmission input element 13 for receiving the input torque T1 applied thereto by means of a tool, i.e. a manual or electrical screwdriver. Accordingly, the transmission input element 13 is configured for being releasably connected to the tool. For doing so, the transmission input element 13 comprises an interface element 100 provided at an end portion thereof which protrudes from the housing 12 for ensuring a good accessibility. The interface element 100 is a recessed connecting element in the form of a socket head which is form-fittingly connectable to an actuated hex key rod of the tool.

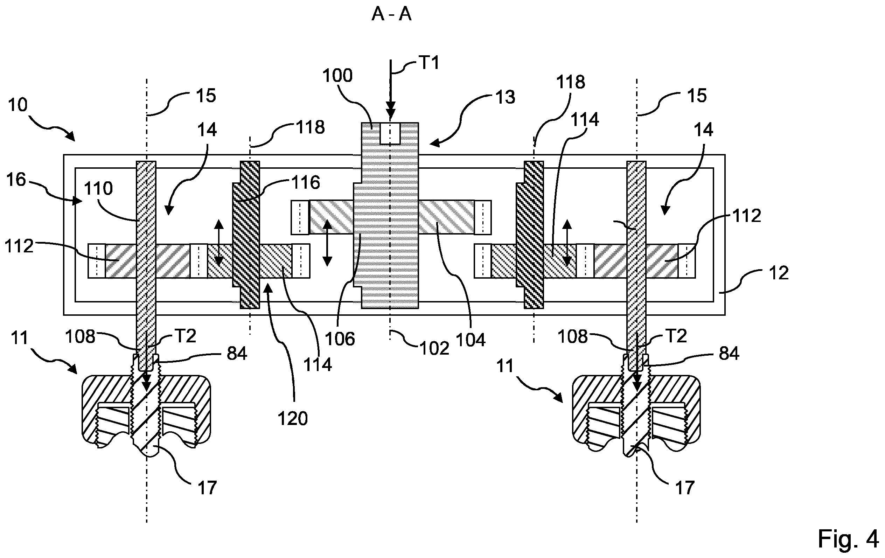

The transmission input element 13 is rotatably mounted in the housing 12 around a further rotational axis 102 by means of a bearing (not shown). The further rotational axis 102 is parallel to and spaced apart from the rotational axis 15 of the transmission output element 14. Further, opposed to the interface element end, the transmission input element 13 is fixed to a central gear 104 by means of a form-fitting and torque-transmitting coupling 106, i.e. by means of a key, such that the central gear 104 is rotated upon rotation of the transmission input element 13. The coupling is provided such that the central gear 104 is movable relative to the transmission input element 13 along the further rotational axis 102, as indicated by an arrow in Figure 3, between an engagement position as shown in Figure 3 and a disengagement position as shown in Figure 4.

In the engagement position, the central gear 104 is configured to enable or engage a torque-transmitting connection to each one of the transmission output elements 14 such that, upon rotation of the transmission input element 13, each one of the transmission output elements 14 is rotated about their rotational axis 15. In other words, in this position, the central gear 104 is connectable to each one of the transmission output elements in a torque-transmitting manner. However, when the central gear 104 is positioned in its disengagement position, the torque-transmitting connection between the transmission input element 13 and each one of the transmission output elements 14 is released such that, upon rotation of the transmission input element 13, none of the transmission output elements 14 is rotated about their rotational axis 15. The apparatus 10 is configured such that an operator may move the central gear 104 between its engagement position and disengagement position. In one configuration, the central gear 104 may be preloaded towards its engagement position by means of a spring element.

The central gear 104 forms a part of the gear unit 16. Thus, by being provided with the movable central gear 104, the shown apparatus 10 is configured for being operated in an engaged operating state, in which the gear unit 16 is configured to transfer a rotational movement of the transmission input element 13 into a rotational movement of each one of the transmission output elements 14 around their rotational axis 15, and a disengaged operating state, in which, upon rotation of the transmission input element 13, none of the transmission output elements 14 rotates around its rotational axis 15. Specifically, for operating the apparatus 10 in its engaged operating state, the central gear 104 may be moved into its engagement position as depicted in Figure 3. Accordingly, for operating the apparatus 10 in its disengaged operating state, the central gear 104 may be moved into its disengagement position as depicted in Figure 4.

As set forth above, each one of the transmission output elements 14 is rotatably mounted in the housing 12 around their rotational axis 15. In the shown apparatus 10, the rotational axes 15 of the transmission output elements 14 are parallel to one another and spaced apart from one another such that they do not coincide.

Each one of the transmission output elements 14 is connected to one actuating element 17 of a screw tensioning device 11. By such a configuration, the screw tensioning devices 11 are actuated upon rotational movement of the associated transmission output element 14. For being connectable to the actuating element 17 of the screw tensioning device 11, each one of the transmission output elements 14 comprises a further interface element 108 which protrudes from the housing 12 for ensuring a good accessibility. The further interface element 108 is a connecting element in the form of a hex key rod which is form-fittingly connectable to a socket head provided at the recessed rod end 84 of the actuating element 17. In this way, a releasable torque-transmitting connection is provided between the transmission output elements 14 and the respective screw tensioning devices 11. In this configuration, the rotational axis 15 of the transmission output element 14 coincides with a longitudinal axis of the actuating element 17 and thus with the longitudinal axis 42 of the screw tensioning device 11.

Further, each one of the transmission output elements 14 comprises a shaft 110 rotatably mounted in the housing 12 by means of a bearing (not shown), at an end portion of which the further interface element 108 is provided. At each shaft 110, an outer gear 112 is firmly fixed which is connectable to the central gear 104 in a torque-transmitting manner via an intermediate gear 114.

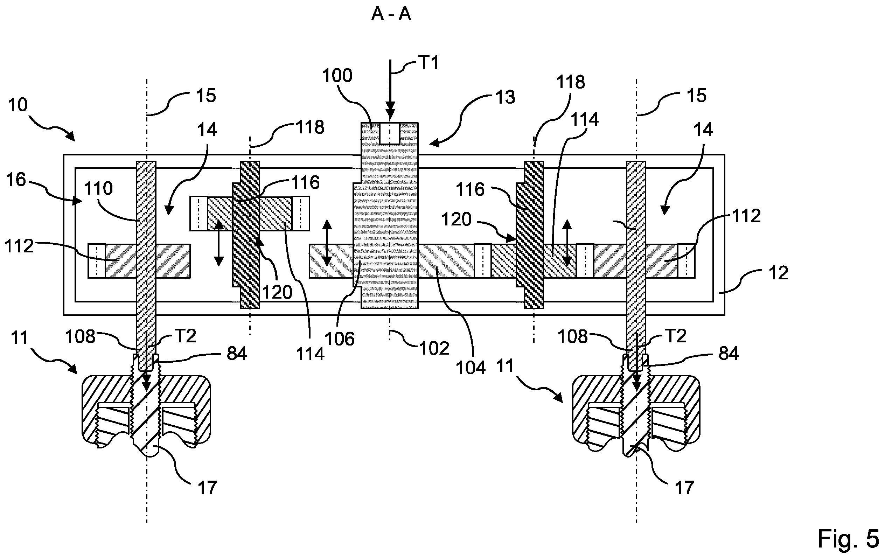

Each one of the intermediate gear 114 is coupled to a further shaft 116 rotatably mounted in the housing 12 around a third rotational axis 118 being parallel to and spaced apart from the rotational axis 15 of the transmission output elements 14 and the further rotational axis 102 of the transmission input element 13. Specifically, the intermediate gear 114 is coupled to the further shaft 116 by means of a form-fitting and torque-transmitting coupling 120, i.e. by means of a key, such that the intermediate gear 114 is movable relative to the further shaft 116 along the third rotational axis 118, as indicated by an arrow in Figure 3, between an engagement position as shown in Figure 3 and a disengagement position as shown in Figure 5.

In the engagement position, the intermediate gear 114 is configured to enable or engage a torque-transmitting connection between the transmission input element 13 and the associated transmission output element 14 such that, upon rotation of the transmission input element 13, the associated transmission output elements 14 is rotated about its rotational axis 15. In other words, the respective intermediate gear 114 is connectable to the transmission input element 13 and the associated transmission output element 14 in a torque-transmitting manner.

By contrast, when the intermediate gear 114 is positioned in its disengagement position, the torque-transmitting connection between the transmission input element 13 and the associated transmission output element 14 is released such that, upon rotation of the transmission input element 13, the associated transmission output element 14 is not rotated about its rotational axis 15. The apparatus 10 is configured such that an operator may selectively move each one of the intermediate gears 114 between its engagement position and disengagement position. In one configuration, the intermediate gears 114 may be preloaded towards their engagement position by means of a spring element.

The intermediate gears 114 form a part of the gear unit 16. Thus, by being provided with the movable intermediate gears 114, the gear unit 16 is configured to selectively transfer a rotational movement of the transmission input element 13 into a rotational movement of at least one of the transmission output elements 14. This means that the gear unit 16 may set individually for each transmission output element 14, i.e. independently from the other transmission output elements 14, whether or not the rotational movement of the transmission input element 13 is transferred into a rotational movement of the respective transmission output element 14. In other words, the gear unit 16 is configured to selectively engage or release the torque-transmitting connection, i.e. for rotationally actuating the transmission output elements 14 around their rotational axis 15, between the transmission input element 13 and the individual transmission output elements 14.

In other words, by being provided with the intermediate gears 114, the apparatus 10 is configured for being operated in a partially engaged operating state, in which the gear unit 16 is configured to, for at least one transmission output element 14, engage a torque-transmitting connection to the transmission input element 13 for rotational actuation of the at least one transmission output element 14 and, for at least one other transmission output element 14, release the torque-transmitting connection to the transmission input element 13. In this state, only a part of the transmission output elements 14, i.e. one, two or three transmission output elements 14, is rotated about their rotational axis 15 upon rotation of the transmission input element 13, while the at least one other transmission output element 4 is not actuated.

In the shown configuration, the gear unit 16 is configured such that, upon rotational actuation of the transmission input element 13, an absolute value of a rotational speed of the transmission input element 13 is higher compared to an absolute value of a rotational speed of the transmission output element 14.

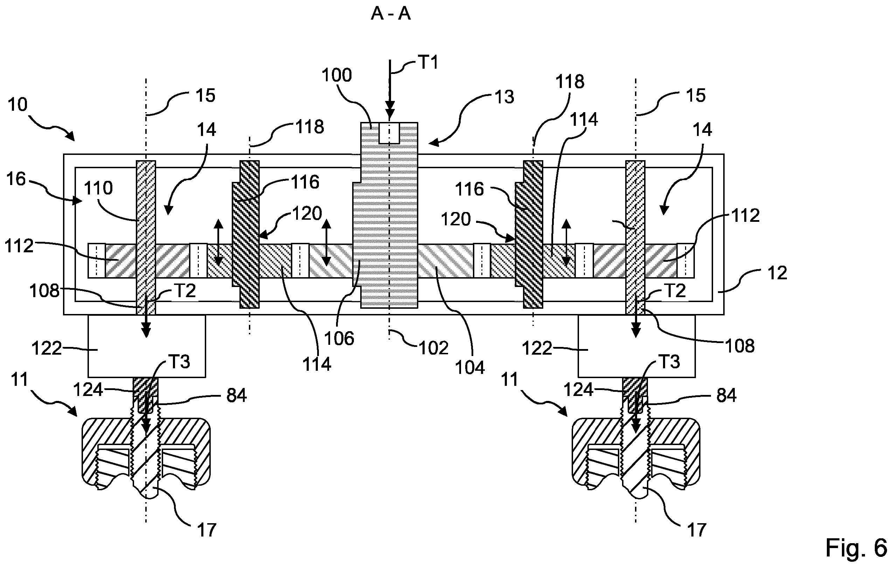

Figure 6 shows a further embodiment of the apparatus 10. Compared to the configuration depicted in Figures 1 to 5, the apparatus 10 comprises four torque multiplier units 122 interposed between the transmission output elements 14 and the actuating elements 17 of the screw tensioning devices 11, respectively. Specifically, each of the torque multiplier units 122 is connected to one transmission output element 14 and to one actuating element 17 of a screw tensioning device 11, wherein each torque multiplier unit 122 is configured to transform the output torque T2 applied to the associated transmission output element 14 into an actuating torque T3 acting on the associated actuating element 17 which absolute value is higher compared to the output torque T2. For doing so, the torque multiplier units 122 may be equipped with a planetary gear. The planetary gear may comprise a sun gear connected to the transmission output element 14, at least one planet gear supported by a carrier connected to a torque output element 124 of the torque multiplier unit and a ring gear fixed to a housing 12 of the apparatus 10 in a torque-transmitting manner. In this configuration, the torque output element 124 is provided with a third interface element designed similar to the further interface element 108 of the transmission output element so as to establish a form-fitting connection to the actuating element 17.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention as defined in the claims.

This is in particular the case with respect to the following optional features which may be combined with some or all embodiments, items and/or features mentioned before in any technically feasible combination.

An apparatus may be provided for simultaneously actuating at least two screw tensioning devices. The apparatus may comprise a transmission input element for engagement with a tool; at least two transmission output elements, each of which is connectable to a screw tensioning device and is rotatably mounted around a rotational axis; and a gear unit configured to transfer a rotational movement of the transmission input element into a rotational movement of each one of the transmission output elements around their respective rotational axis.

In the provided apparatus, the transmission output elements are connectable to one screw tensioning device, respectively, and are simultaneously rotated upon rotation of the transmission input element. In this way, the provided apparatus enables to simultaneously actuate at least two screw tensioning devices via the transmission output elements. The apparatus therefore enables time-efficient assembly in applications, where at least two tensable screw connections are utilized.

Specifically, by means of the gear unit, the provided apparatus is configured to mechanically actuate more than one screw tensioning device. Compared to configurations, in which a plurality of hydraulically driven screw tensioning devices are simultaneously actuated by means of a common pressure source, the suggested apparatus may have a less complex design and may enable a safer and less effortful assembly procedure for an operator. As to substance, for hydraulically actuating more than one screw tensioning device by means of a common pressure source, a certain volume of hydraulic fluid is required. In such configurations, for actuating the screw tensioning devices, the hydraulic fluid has to be exerted to high-pressure which, however, causes compression of the same. In this way, the hydraulic fluid stores mechanical energy which may pose a hazard potential. In contrast thereto, by mechanically actuating screw tensioning devices as enabled by the suggested apparatus, both hazard potential induced by pressurized fluid as well as guiding and storing of pressurized fluid may be omitted, thereby enabling a safer and less complex apparatus for actuating more than one screw tensioning device.

Generally, the proposed apparatus may be used, for example, in the field of steel constructions and various engine design applications, but is not limited thereto. Rather, the proposed device may be used in any application in which more than one tensable screw is tightened by employing torque-free tensioning methods. In one example, the proposed apparatus may be used to fasten a turbo charger to an engine crank case by means of more than one tensable screw.

Specifically, the apparatus may be used for actuating at least two screw tensioning devices or any other devices for tensioning and/or loosening a tensable connecting element. The tensable connecting elements may be or comprise a tensable screw, a tensable bolt and/or any other type of tensable connecting element.

Further, the connecting element to be tensioned and/or loosened by such tensioning devices may be intended and/or configured to tighten a component to which it is fastened. Alternatively or additionally, the connecting element to be tensioned and/or loosened by may be intended and/or configured for connecting, i.e. form- and/or force-fittingly connecting, a first component to a second component. For doing so, a first end of the connecting element may be fixed to the first component, i.e. by means of a threaded engagement. For example, the first component may be an engine crank case and the second element may be a turbo charger mount.

In the following, an exemplary configuration of a screw tensioning device to be actuated by the proposed apparatus is specified. The proposed apparatus may be used for actuating at least one such screw tensioning device, but is not limited thereto. Rather, the proposed apparatus may be configured to actuate other types of screw tensioning devices, i.e. screw tensioning devices which are operable by rotationally actuating an actuating element.

The screw tensioning device may comprise an engagement element connectable to the connecting element. In other words, the engagement element may be configured for being connected to the connecting element, i.e. in a force- and/or form-fitting manner. For doing so, the engagement element may comprise an engagement section for engaging with the connecting element. Specifically, the engagement section may be engaged with the connecting element by means of a threaded engagement. The engagement section may be provided at an end portion of the engagement element. Further, the engagement section may be configured to engage with a second end of the connecting element arranged opposed to the first end thereof. For example, the engagement section may be provided with a thread designed complementary to a thread formed at the second end of the connecting element.

The screw tensioning device may further comprise a support element configured to support the engagement element against the component to be tightened during tensioning operation of the device. In other words, the support element is configured to, during the tensioning operation of the screw tensioning device, abut on the component to be tightened, i.e. on the first or the second component. In this way, the support element is capable of generating a force, i.e. a reaction force, counteracting the pulling force exerted onto the connecting element connected to the engagement element during tension operation of the device. The screw tensioning device is provided such that the engagement element is translationally movable relative to the support element, i.e. along a longitudinal axis of the device. Upon translationally moving the engagement element relative to the support element, a tensioning force may be applied to or may be removed from the connecting element fixed to the engagement section. Thus, the device may be provided such that the engagement element is translationally movable relative to the support element so as to apply a tension to or to remove a tension from the connecting element.

The screw tensioning device may further comprise an actuating unit for the engagement element, i.e. for translationally moving the engagement element relative to the support element and thus relative to the component to be tightened. The actuating unit may comprise the actuating element and may be configured for translating a rotational movement applied to the actuating element into a translational movement of the engagement element relative to the component to be tightened and thus relative to the support element. An exemplary configuration of such an actuating unit, i.e. of interlinking the actuating element to the engagement element, is specified in connection with Figure 2 and its accompanying description.

In the following the configuration of the apparatus is further specified which may be configured for simultaneously actuating at least two above describe screw tensioning devices.

The apparatus may comprise the transmission input element for engagement with a tool. In other words, the transmission input element may be configured for being releasably connected to a tool. The tool may be a manually actuated or electrically actuated tool, i.e. a manual or electrical screwdriver or an electric actuator. Specifically, the transmission input element may be provided with an interface element for receiving an actuating or input torque. For doing so, the interface element may be designed and configured for being releasably connected to the tool in a torque-transmitting manner. The transmission input element may be provided with a connecting element complementary designed to a further connecting element provided at the tool so as to provide a releasable form-fitting connection. For example, the connecting element may have a polygonal profile, i.e. a hexagonal profile. Accordingly, the transmission input element may constitute a socket head which is form-fittingly connectable to, for example, a hex key rod of the tool, or vice versa.

Further, the transmission input element may be rotatably mounted in the apparatus around a further rotational axis. The further rotational axis of the transmission input element may coincide with or be parallel to a longitudinal axis of the apparatus and/or the transmission input element. Further, the further rotational axis of the transmission input element may be parallel to the longitudinal axis of at least one screw tensioning device. For example, the further rotational axis of the transmission input element may be parallel to the longitudinal axis of each one of the screw tensioning devices.

As set forth above, the apparatus may comprise the at least two transmission output elements. For example, the apparatus may comprise four or more transmission output elements. Each of the at least two transmission output elements is connectable to one of the at least two screw tensioning devices, respectively. In other words, each of the at least two transmission output elements may be associated to merely one screw tensioning device. Thus, in a state, in which the apparatus is engaged with the at least two screw tensioning devices, each of the transmission output elements is connected to a different one of the at least two screw tensioning devices. In this state, the screw tensioning devices are actuated upon rotational movement of the transmission output elements.

Specifically, the transmission output elements may be configured for being releasably connected to an actuating unit of the screw tensioning device in a torque-transmitting manner. The actuating element of the screw tensioning devices may be configured to receive an actuating torque so as to operate the screw tensioning device. In other words, by rotationally actuating the actuating element, the screw tensioning device is operated so as to perform a screw tensioning operation.

For being connectable to the actuating element of the associated screw tensioning device, each of the transmission output elements may comprise a connecting element designed complementary to a further connecting element of the actuating element so as to provide a releasable form-fitting connection. For example, the connecting element of the transmission output element may have a polygonal profile, i.e. a hexagonal profile. Accordingly, the transmission output element may constitute a socket head which is form-fittingly connectable to, for example, a hex key rod of the actuating element, or vice versa.

In the apparatus, each of the transmission output elements may be rotatably mounted around a respective rotational axis. The rotational axes of the transmission output elements may not coincide. In other words, the rotational axes may be parallel to one another and may be spaced apart from one another. Alternatively, the rotational axes of the transmission output elements may coincide. In other words, the rotational axis of one transmission output element may or may coincide with a rotational axis of at least one other transmission output element. Further, the rotational axes of the transmission output elements may be parallel to or inclined to the rotational axis of the transmission input element.

Further, the apparatus may comprise the gear unit configured to transfer a rotational movement of the transmission input element into a rotational movement of each one of the transmission output elements around their rotational axis. In other words, upon rotation of the transmission input element around the further rotational axis, each one of the transmission output elements may be rotated around their respective rotational axis, thereby actuating the associated screw tensioning device. Accordingly, the gear unit may be configured to transfer the input torque applied to the transmission input element into an output torque applied to each one of the transmission output elements. The input torque may have a direction which coincides with the further rotational axis of the transmission input element. At each transmission output element, the output torque may have a direction which coincides with the rotational axis of the respective transmission output element. The rotational actuation of the transmission input element may be caused or induced by the input torque applied to the transmission input element by means of the tool or any other rotational actuator.

Specifically, the gear unit may be configured such that, upon rotational actuation of the transmission input element, a rotational speed of the transmission input element around the further rotational axis, i.e. an absolute value thereof, is higher compared to a rotational speed of the transmission output element around their respective rotational axis, i.e. an absolute value thereof. By such a configuration, although the input torque is divided or partitioned into at least two output torques applied to different transmission output elements and thus to different screw tensioning devices, the absolute value of the output torques may be increased. Accordingly, for actuating the at least two screw tensioning devices, a minimal input torque to be applied to the transmission input element may be decreased such that the apparatus may be actuated by means of a manual or electric screwdriver.

In a further development, the apparatus may be configured for being operated in an engaged operating state, in which the gear unit is configured to transfer a rotational movement of the transmission input element, i.e. around the further rotational axis, into a rotational movement of each one of the transmission output elements around their rotational axis. In other words, in the engaged state, the transmission input element may be coupled to each one of the transmission output elements in a torque-transmitting manner so as to translate the input torque into the output torque acting on the transmission output elements. Thus, a torque-transmitting connection between the transmission input element and each one of the transmission output elements is established for rotationally actuating the transmission output elements around their rotational axis. In the engaged state, as a result, by actuating the transmission input element, the transmission output elements may be simultaneously rotated.

Further, the apparatus may be configured for being operated in a disengaged operating state, in which, upon rotation of the transmission input element, none of the transmission output elements is rotated around its rotational axis. In this state, the transmission input element may be decoupled from each one of the transmission output elements. In other words, in the disengaged operating state, the torque-transmitting connection between the transmission input element and the transmission output elements may be released such that the input torque is not translated into the output torque acting on the transmission output elements. As a result, upon rotationally actuating the transmission input element in the disengaged operating state of the apparatus, none of the transmission output elements is exerted or subjected to the output torque and thus none of the screw tensioning devices is actuated. In other words, in the disengaged operating state of the apparatus, the gear unit may be in an idle state, in which the input torque applied to the transmission input element is not transferred to any one of the transmission output elements.

In a further development, the gear unit comprises a central gear. The central gear may be coupled to the transmission input element in a torque-transmitting manner. Accordingly, the central gear may be rotatably mounted around the further rotational axis which may coincide with the longitudinal axis of the transmission input element. More specifically, the central gear may constitute or form the transmission input element or may be firmly fixed to the transmission input element. The central gear may be connected or may be connectable to each one of the transmission output elements in a torque-transmitting manner. Specifically, the central gear may be connected to each one of the transmission output elements in such a way that, when the central gear is rotated around the further rotational axis, each one of the transmission output elements rotates around its respective rotational axis.

Further, the central gear may be provided such that it is movable between an engagement position, in which a torque-transmitting connection to the transmission output elements, i.e. for rotating the transmission output elements around their respective rotational axis, is engaged, and a disengagement position, in which the torque-transmitting connection to the transmission output elements is released. When being arranged in the engagement position, the central gear may be configured to, upon rotation of the transmission input element around the further rotational axis, rotate each one of the mission output elements around their respective rotational axis. By contrast, when the central gear is positioned in its disengagement position, a rotational actuation of the transmission input element and/or the central gear may not cause the transmission output elements to rotate around their respective rotational axis.

For example, for operating the apparatus in its engaged operating state, the central gear may be positioned or moved, i.e. by the operator, into its engagement position. Accordingly, for operating the apparatus in its disengaged operating state, the central gear may be positioned or moved, i.e. by an operator, into its disengagement position. Further, the central gear may be mounted and supported in the apparatus such that it is preloaded, i.e. by means of a spring element, towards its engagement position or its disengagement position.

In a further development, the gear unit may be configured to selectively transfer a rotational movement of the transmission input element into a rotational movement of at least one of the transmission output elements. In other words, the gear unit may be configured to selectively set which one of the transmission output elements is rotated upon rotational actuation of the transmission input element. This means that the gear unit may set individually for each transmission output element, i.e. independently from the other transmission output elements, whether or not the rotational movement of the transmission input element is transferred into a rotational movement of the transmission output element. In other words, the gear unit may be configured to selectively engage or release the torque-transmitting connection, i.e. for rotationally actuating the transmission output elements around their rotational axis, between the transmission input element and the individual transmission output elements.

For doing so, the apparatus may be operated in a partially engaged operating state, in which the gear unit is configured to, for at least one transmission output element, engage the torque-transmitting connection to the transmission input element for rotational actuation of the at least one transmission output element and, for at least one other transmission output element, release the torque-transmitting connection to the transmission input element. In this operating state, the gear unit may be configured to, upon rotation of the transmission input element, rotate at least one transmission output element around its rotational axis, while at least one other transmission output element is not rotationally actuated around its rotational axis.

In a further development, the gear unit may comprise at least two intermediate gears, each of which is connected or connectable to the transmission input element and one associated transmission output element in a torque-transmitting manner. In this way, the intermediate gears may form a part of the torque-transmitting connection of the transmission output elements to the transmission input element, respectively, for rotationally actuating the transmission output elements. For doing so, each of the intermediate gears may be interposed between one transmission output element and the transmission input element. The intermediate gears may be rotatably mounted around a rotational axis which is parallel to and spaced apart from the rotational axis of the associated transmission output element. Alternatively, the rotational axis of the intermediate gears may coincide with the rotational axis of the associated transmission output element.

In a further development, each one of the at least two intermediate gears may be configured to be movable between an engagement position, in which a torque-transmitting connection between the transmission input element and the associated transmission output element is engaged, and a disengagement position, in which the torque-transmitting connection between the transmission input element and the associated transmission output element is released. In this way, by positioning the intermediate gears into its engagement or disengagement position, the apparatus is enabled to selectively establish or release the torque-transmitting connection between the transmission input element and the respective transmission output elements so as to set which one of the transmission output elements is to be rotationally actuated upon rotation of the submission input element.

Further, the apparatus may comprise at least two torque multiplier units, each of which may be engaged with one transmission output element. Further, each one of the at least two torque multiplier may be connectable to one actuating element of a screw tensioning device. Specifically, the torque multiplier unit may comprise a torque input element connected to the associated transmission output element in a torque-transmitting manner and a torque output element connectable to the actuating element of the associated screw tensioning device. Each torque multiplier unit may be configured to transform an output torque applied to the associated transmission output element into an actuating torque acting on the associated actuating element which absolute value is higher compared to the output torque.

Specifically, at least one of the at least two torque multiplier units may be equipped with a planetary gear, comprising a sun gear connected to the transmission output element, at least one planet gear supported by a carrier connected to a torque output element of the torque multiplier unit and a ring gear fixed to a housing of the apparatus in a torque-transmitting manner. By being equipped with the planetary gear, the apparatus may be provided with a compact design, while ensuring that an actuating torque to be applied to the transmission input element may be relatively small. In this way, the proposed apparatus may be actuated with an electric screw-driver.

Further, a use of the above described apparatus may be provided for simultaneously actuating at least two screw tensioning devices. Specifically, the at least two transmission output elements may be connected to one actuating element of the at least two tensioning devices, respectively, for actuating the screw tensioning devices.

To that end, a method for actuating at least two screw tensioning devices may be provided, comprising the steps of providing an above described apparatus; connecting each one of the at least two transmission output elements of the apparatus to one actuating element of the screw tensioning devices; and rotationally actuating the transmission input element of the apparatus to simultaneously actuate the screw tensioning devices. In the proposed method, an apparatus as described above is used. Accordingly, technical features which are described in connection with the apparatus may also relate and be applied to the method, and vice versa.

The method may further comprise a step of selectively actuating at least one of the screw tensioning devices by means of the apparatus. For example, for doing so, at least one of the intermediate gears of the gear unit may be positioned into its engaged position, while at least one other intermediate gear may be positioned into its disengaged position.

For example, when performing the method, after connecting the apparatus, i.e. its transmission output elements, to the actuating elements of the screw tensioning devices, the transmission input element of the apparatus may be rotationally actuated so as to simultaneously actuate the screw tensioning devices. Thereafter, the screw tensioning devices may be successively further actuated by means of the apparatus, i.e. by selectively actuating the individual screw tensioning devices.

### Industrial Applicability

The proposed apparatus may be used for simultaneously actuating at least two screw tensioning devices, each of which is configured for fastening and/or loosening one tensable connecting element 18 to a component to be tightened. The apparatus may be used in different fields of application, such as in steel constructions or engine design applications. In the following, the use of the apparatus 10 depicted in Figures 1 to 6 for simultaneously actuating at least two screw tensioning devices 11 is described in more detail.

To connect a first component 21, e.g. a crank case, to a second component 22, e.g. a turbo charger mount, using an apparatus 10 together with four screw tensioning devices 11 as shown in Figure 1, the second component 22 is positioned next to the first component 21 and four connecting elements 18 in the form of screws are guided through respective holes in the second component 22 and connected to the first component 21 by means of a threaded connection. As a result, the connecting elements 18 extend from a side of the second component 22 which faces away from the first component 21. A nut 23 is screwed on each connecting element 18 from the second end 20 of the connecting element 18 which is arrange opposite to the first end 19 of the connecting element 18 positioned in and fastened to the first component 21.

Then, each connecting element 18 is engaged with one respective screw tensioning device 11 such that the second end 20 of the connecting element 18 is fixed to the engagement section of the engagement element 24 to establish a threaded connection between the engagement element 24 and the second end 20 of the connecting element 18.

Thereafter, the apparatus 10 is provided and connected to the screw tensioning devices 11 such that each transmission output element 14 is connected to an actuating element 17 of one screw tensioning device 11.

To apply a tension force to the connecting elements 18, the transmission input element 13 is rotationally actuated by using an electric or manual screwdriver so as to simultaneously actuate the four screw tensioning devices 11 by rotationally actuating their actuating element 17 via the transmission output elements 14. During this step, the apparatus 10 is operated in its engaged operating state, in which, upon rotation of the transmission input element 13, each one of the transmission output elements 14 and thus each actuating element 17 of the screw tensioning devices 11 are rotated.

Upon rotationally actuating the actuating elements 17, in each screw tensioning device 11, the pistons 48 is translationally actuated relative to the engagement element 24 in a direction facing away from the second component 22. By moving the piston 48 in this direction, i.e. upwards, the piston portion 52 of the fluid chamber 50 decreases and hydraulic fluid is pushed therefrom into the effective portion 54 of the fluid chamber 50 via the connecting bores 56. As a result, the effective portion 54 increases in volume, thereby exerting a pressure on the engagement element 24 which moves the same along the longitudinal axis 42 of the device 11 in respect to the support element 40. Accordingly, a distance between the engagement element 24 and the first and the second component 21, 22 increases, thereby tensioning and thus lengthening the connecting element 18.

This step is performed until a predefined pressure in one of the fluid chambers 50 of the screw tensioning devices 11 is reached.

Then, in a subsequent step, each one of the screw tensioning devices 11 is individually and successively operated so as to ensure proper assembly of the respective connecting elements 18. During this step, the apparatus 10 is operated in its partially engaged operating state in which, upon rotation of the transmission input element 13, only a single one of the transmission output elements 14 and thus only one actuating element 17 of one screw tensioning device 11 is rotated. Specifically, in this step, each one of the screw tensioning devices 11 is operated until a predefined maximum pressure in its fluid chamber 50 is reached so as to set a predefined tensioned condition of the connecting elements 18.

In this tensioned condition of connecting element 18, for retaining the tension on the connecting element 18, the nut 23 is further tightened on the connecting element until the nut 23 abuts on the second component 22. Alternatively, for loosening the connecting elements, the nut 23 may be unscrewed. This is performed by reaching through openings in the support element 40 with a tool, like a stick which end may be inserted in openings at the side of the nut 23 to turn the nut 23 on the connecting element 18 from the side.

Thereafter, the apparatus 10 is again operated in its engaged operating state, in which the tension force applied to the connection elements 18 is removed by rotationally actuating the transmission input element 13 in a direction that is reversed compared to the rotational actuation of the same for generating the tension force as described above.

## Claims

1. Apparatus (10) for simultaneously actuating at least two screw tensioning devices (11), comprising:
- a transmission input element (13) for engagement with a tool;
- at least two transmission output elements (14), each of which is connectable to one of the screw tensioning devices (11) and rotatably mounted around a rotational axis (15); and
- a gear unit (16) configured to transfer a rotational movement of the transmission input element (13) into a rotational movement of each one of the transmission output elements (14) around their rotational axis (15), wherein
the gear unit (16) comprises a central gear (104) fixed to the transmission input element (13) and connected or connectable to each one of the transmission output elements (14) in a torque-transmitting manner, wherein the central gear (104) is movable between an engagement position, in which a torque-transmitting connection to the transmission output elements (14) is engaged, and a disengagement position, in which the torque-transmitting connection to the transmission output elements (14) is released
and/or wherein
the gear unit (16) comprises at least two intermediate gears (114) connected or connectable to the transmission input element (13) and one associated transmission output element (14) in a torque-transmitting manner, wherein each one of the intermediate gears (114) is movable between an engagement position, in which a torque-transmitting connection between the transmission input element (13) and the associated transmission output element (14) is engaged, and an disengagement position, in which the torque-transmitting connection between the transmission input element (13) and the associated transmission output element (14) is released.

2. Apparatus according to claim 1, wherein in a state, in which the transmission output elements (14) are connected to the screw tensioning devices (11), the screw tensioning devices (11) are actuated upon rotational movement of the transmission output elements (14).

3. Apparatus according to claim 1 or 2, wherein the rotational axes (15) of the transmission output elements (14) do not coincide.

4. Apparatus according to any one of claims 1 to 3, wherein the gear unit (16) is configured such that, upon rotational actuation of the transmission input element (13), a rotational speed of the transmission input element (13) is higher compared to a rotational speed of the transmission output element (14).

5. Apparatus according to any one of claims 1 to 4, which is configured for being operated in an engaged operating state, in which the gear unit (16) is configured to transfer a rotational movement of the transmission input element (13) into a rotational movement of each one of the transmission output elements (14) around their rotational axis (15), and a disengaged operating state, in which, upon rotation of the transmission input element (13), none of the transmission output elements (14) is rotated around its rotational axis (15).

6. Apparatus according to any one of claims 1 to 5, wherein the gear unit (16) is configured to selectively transfer a rotational movement of the transmission input element (13) into a rotational movement of at least one of the transmission output element (14).

7. Apparatus according to any one of claims 1 to 6, which is configured to be operated in a partially engaged operating state, in which the gear unit (16) is configured to, for at least one transmission output element (14), engage a torque-transmitting connection to the transmission input element (13) for rotational actuation of the at least one transmission output element (14) and, for at least one other transmission output element (14), release the torque-transmitting connection to the transmission input element (13).

8. Apparatus according to any one of claims 1 to 7, further comprising at least two torque multiplier units (122), each of which is engaged with one transmission output element (14) and is configured for being connected to one actuating element (17) of a screw tensioning device (11), wherein each torque multiplier unit (122) is configured to transform an output torque (T2) applied to the associated transmission output element (14) into a actuating torque (T3) acting on the associated actuating element (17) which absolute value is higher compared to the output torque.

9. Use of the apparatus (10) according to any one of claims 1 to 8 for simultaneously actuating at least two screw tensioning devices (11).

10. Method for actuating at least two screw tensioning devices (11), comprising the steps of:
- providing an apparatus (10) according to any one of claims 1 to 8;
- connecting each one of the at least two transmission output elements (14) of the apparatus (10) to one actuating element (17) of the screw tensioning devices (10); and
- rotationally actuating the transmission input element (13) of the apparatus (10) to simultaneously actuate the screw tensioning devices (11).

## Patentansprüche

1. Einrichtung (10) zum gleichzeitigen Betätigen von mindestens zwei Schraubenspannvorrichtungen (11), umfassend:
- ein Kraftübertragungseingangselement (13) für einen Eingriff mit einem Werkzeug;
- mindestens zwei Kraftübertragungsausgangselemente (14), die jeweils mit einer der Schraubenspannvorrichtungen (11) verbindbar und um eine Drehachse (15) herum drehbar gelagert sind; und
- eine Getriebeeinheit (16), die konfiguriert ist, um eine Drehbewegung des Kraftübertragungseingangselements (13) in eine Drehbewegung jedes der Kraftübertragungsausgangselemente (14) um ihre Drehachse (15) herum zu überführen, wobei
die Getriebeeinheit (16) ein Mittengetriebe (104) umfasst, das an dem Kraftübertragungseingangselement (13) befestigt ist und mit jedem der Kraftübertragungsausgangselemente (14) drehmomentübertragend verbunden oder verbindbar ist, wobei das Mittengetriebe (104) zwischen einer Eingriffsposition, in der eine drehmomentübertragende Verbindung mit den Kraftübertragungsausgangselementen (14) in Eingriff steht, und einer Außereingriffsposition, in der die drehmomentübertragende Verbindung mit den Kraftübertragungsausgangselementen (14) gelöst ist, bewegbar ist
und/oder wobei
die Getriebeeinheit (16) mindestens zwei Zwischenräder (114), die mit dem Kraftübertragungseingangselement (13) und einem zugehörigen Kraftübertragungsausgangselement (14) drehmomentübertragend verbunden oder verbindbar sind, umfasst, wobei jedes der Zwischenräder (114) zwischen einer Eingriffsposition, in der eine drehmomentübertragende Verbindung zwischen dem Kraftübertragungseingangselement (13) und dem zugehörigen Kraftübertragungsausgangselement (14) in Eingriff steht, und einer Außereingriffsposition, in der die drehmomentübertragende Verbindung zwischen dem Kraftübertragungseingangselement (13) und dem zugehörigen Kraftübertragungsausgangselement (14) gelöst ist, bewegbar ist.

2. Einrichtung nach Anspruch 1, wobei in einem Zustand, in dem die Kraftübertragungsausgangselemente (14) mit den Schraubenspannvorrichtungen (11) verbunden sind, die Schraubenspannvorrichtungen (11) bei der Drehbewegung der Kraftübertragungsausgangselemente (14) betätigt werden.

3. Einrichtung nach Anspruch 1 oder 2, wobei die Drehachsen (15) der Kraftübertragungsausgangselemente (14) nicht zusammenfallen.

4. Einrichtung nach einem der Ansprüche 1 bis 3, wobei die Getriebeeinheit (16) derart konfiguriert ist, dass bei einer Drehbetätigung des Kraftübertragungseingangselements (13) eine Drehzahl des Kraftübertragungseingangselements (13) im Vergleich zu einer Drehzahl des Kraftübertragungsausgangselements (14) höher ist.

5. Einrichtung nach einem der Ansprüche 1 bis 4, die zum Betriebenwerden in einem Eingriffsbetriebszustand, in dem die Getriebeeinheit (16) konfiguriert ist, um eine Drehbewegung des Kraftübertragungseingangselements (13) in eine Drehbewegung jedes der Kraftübertragungsausgangselemente (14) um ihre Drehachse (15) herum zu überführen, und einem Außereingriffsbetriebszustand, in dem bei der Drehung des Kraftübertragungseingangselements (13) keines der Kraftübertragungsausgangselemente (14) um seine Drehachse (15) herum gedreht wird, konfiguriert ist.

6. Einrichtung nach einem der Ansprüche 1 bis 5, wobei die Getriebeeinheit (16) konfiguriert ist, um eine Drehbewegung des Kraftübertragungseingangselements (13) in eine Drehbewegung mindestens eines der Kraftübertragungsausgangselemente (14) zu überführen.

7. Einrichtung nach einem der Ansprüche 1 bis 6, die konfiguriert ist, um in einem teilweisen Eingriffsbetriebszustand betrieben zu werden, in dem die Getriebeeinheit (16) konfiguriert ist, um für mindestens ein Kraftübertragungsausgangselement (14) eine drehmomentübertragende Verbindung mit dem Kraftübertragungseingangselement (13) für die Drehbetätigung des mindestens einen Kraftübertragungsausgangselements (14) in Eingriff zu bringen und für mindestens ein anderes Kraftübertragungsausgangselement (14) die drehmomentübertragende Verbindung mit dem Kraftübertragungseingangselement (13) zu lösen.

8. Einrichtung nach einem der Ansprüche 1 bis 7, ferner umfassend mindestens zwei Drehmomentvervielfältigereinheiten (122), die jeweils mit einem Kraftübertragungsausgangselement (14) in Eingriff stehen und zum Verbundenwerden mit einem Betätigungselement (17) einer Schraubenspannvorrichtung (11) konfiguriert sind, wobei jede Drehmomentvervielfältigereinheit (122) konfiguriert ist, um ein Ausgangsdrehmoment (T2), das auf das zugehörige Kraftübertragungsausgangselement (14) aufgebracht wird, in ein Betätigungsdrehmoment (T3), das auf das zugehörige Betätigungselement (17) wirkt, umzuwandeln, dessen Wert im Vergleich zu dem Ausgangsdrehmoment höher ist.

9. Verwendung der Einrichtung (10) nach einem der Ansprüche 1 bis 8 zum gleichzeitigen Betätigen von mindestens zwei Schraubenspannvorrichtungen (11).

10. Verfahren zum Betätigen von mindestens zwei Schraubenspannvorrichtungen (11), umfassend die Schritte:
- Bereitstellen einer Einrichtung (10) nach einem der Ansprüche 1 bis 8;
- Verbinden jeweils eines der mindestens zwei Kraftübertragungsausgangselemente (14) der Einrichtung (10) mit jeweils einem Betätigungselement (17) der Schraubenspannvorrichtungen (10); und
- Drehbetätigung des Kraftübertragungseingangselements (13) der Vorrichtung (10), um die Schraubenspannvorrichtungen (11) gleichzeitig zu betätigen.

## Revendications

1. Appareil (10) destiné à actionner simultanément au moins deux dispositifs de serrage de vis (11), comprenant :
- un élément d'entrée de transmission (13) destiné à venir en prise avec un outil ;
- au moins deux éléments de sortie de transmission (14), dont chacun pouvant être relié à l'un des dispositifs de serrage de vis (11) et monté de manière rotative autour d'un axe de rotation (15) ; et
- une unité d'engrenage (16) conçue pour transférer un mouvement de rotation de l'élément d'entrée de transmission (13) en un mouvement de rotation de chacun des éléments de sortie de transmission (14) autour de leur axe de rotation (15), dans lequel
l'unité d'engrenage (16) comprend un engrenage central (104) fixé à l'élément d'entrée de transmission (13) et relié ou pouvant être relié à chacun des éléments de sortie de transmission (14) d'une manière de transmission de couple, dans lequel l'engrenage central (104) peut se déplacer entre une position de prise, dans laquelle une liaison de transmission de couple aux éléments de sortie de transmission (14) est en prise, et une position de libération, dans laquelle la liaison de transmission de couple aux éléments de sortie de transmission (14) est libérée
et/ou dans lequel
l'unité d'engrenage (16) comprend au moins deux engrenages intermédiaires (114) reliés ou pouvant être reliés à l'élément d'entrée de transmission (13) et à un élément de sortie de transmission (14) associé d'une manière de transmission de couple, dans lequel chacun des engrenages intermédiaires (114) peut se déplacer entre une position de prise, dans laquelle une liaison de transmission de couple entre l'élément d'entrée de transmission (13) et l'élément de sortie de transmission (14) associé est en prise, et une position de libération, dans laquelle la liaison de transmission de couple entre l'élément d'entrée de transmission (13) et l'élément de sortie de transmission (14) associé est libérée.

2. Appareil selon la revendication 1, dans lequel, dans un état où les éléments de sortie de transmission (14) sont reliés aux dispositifs de serrage de vis (11), les dispositifs de serrage de vis (11) sont actionnés lors du mouvement de rotation des éléments de sortie de transmission (14).

3. Appareil selon la revendication 1 ou 2, dans lequel les axes de rotation (15) des éléments de sortie de transmission (14) ne coïncident pas.

4. Appareil selon l'une quelconque des revendications 1 à 3, dans lequel l'unité d'engrenage (16) est conçue de sorte que, lors de l'actionnement rotatif de l'élément d'entrée de transmission (13), une vitesse de rotation de l'élément d'entrée de transmission (13) est plus élevée par rapport à une vitesse de rotation de l'élément de sortie de transmission (14).

5. Appareil selon l'une quelconque des revendications 1 à 4, qui est conçu pour fonctionner dans un état de fonctionnement en prise, dans lequel l'unité d'engrenage (16) est conçue pour transférer un mouvement de rotation de l'élément d'entrée de transmission (13) en un mouvement de rotation de chacun des éléments de sortie de transmission (14) autour de leur axe de rotation (15), et dans un état de fonctionnement libéré, dans lequel, lors de la rotation de l'élément d'entrée de transmission (13), aucun des éléments de sortie de transmission (14) ne tourne autour de son axe de rotation (15).

6. Appareil selon l'une quelconque des revendications 1 à 5, dans lequel l'unité d'engrenage (16) est conçue pour transférer sélectivement un mouvement de rotation de l'élément d'entrée de transmission (13) en un mouvement de rotation d'au moins l'un de l'élément de sortie de transmission (14).

7. Appareil selon l'une quelconque des revendications 1 à 6, qui est conçu pour fonctionner dans un état de fonctionnement partiellement en prise, dans lequel l'unité d'engrenage (16) est conçu pour, pour au moins un élément de sortie de transmission (14), mettre en prise une liaison de transmission de couple avec l'élément d'entrée de transmission (13) pour l'actionnement rotatif de l'au moins un élément de sortie de transmission (14) et, pour au moins un autre élément de sortie de transmission (14), libérer la liaison de transmission de couple à l'élément d'entrée de transmission (13).

8. Appareil selon l'une quelconque des revendications 1 à 7, comprenant en outre au moins deux unités multiplicatrices de couple (122), dont chacune est en prise avec un élément de sortie de transmission (14) et est conçue pour être reliée à un élément d'actionnement (17) d'un dispositif de serrage de vis (11), dans lequel chaque unité multiplicatrice de couple (122) est conçue pour transformer un couple de sortie (T2) appliqué à l'élément de sortie de transmission (14) associé en un couple d'actionnement (T3) agissant sur l'élément d'actionnement (17) associé dont la valeur absolue est plus élevée par rapport au couple de sortie.

9. Utilisation de l'appareil (10) selon l'une quelconque des revendications 1 à 8 pour actionner simultanément au moins deux dispositifs de serrage de vis (11).

10. Procédé d'actionnement d'au moins deux dispositifs de serrage de vis (11), comprenant les étapes suivantes consistant à :
- fournir un appareil (10) selon l'une quelconque des revendications 1 à 8 ;
- relier chacun des au moins deux éléments de sortie de transmission (14) de l'appareil (10) à un élément d'actionnement (17) des dispositifs de serrage de vis (10) ; et
- actionner de manière rotative l'élément d'entrée de transmission (13) de l'appareil (10) afin d'actionner simultanément les dispositifs de serrage de vis (11).
